# EUROPEAN PATENT SPECIFICATION

(11) **EP 3 140 502 B1**
(45) Date of publication and mention of the grant of the patent: **04.09.2019**
(21) Application number: 15789255.5
(22) Date of filing: 24.04.2015
(51) Int. Cl.: E21B 43/02, E21B 43/08

(54) **FILTER AND RELATED METHODS FOR USE DURING WELLBORE OPERATIONS**
FILTER UND ZUGEHÖRIGE VERFAHREN ZUR VERWENDUNG BEI BOHRLOCHOPERATIONEN
FILTRE ET PROCÉDÉS ASSOCIÉS À UTILISER PENDANT DES OPÉRATIONS DE PUITS DE FORAGE

(30) Priority: 08.05.2014 US 201414260685
(43) Date of publication of application: 15.03.2017
(73) Proprietor: Baker Hughes, a GE company, LLC, Houston, TX 77073 (US)
(72) Inventor: JENKINS, Mark A., Moscow 123001 (RU); FORSTNER, Ingo, 29353 Ahnsbeck (DE)
(74) Representative: BRP Renaud & Partner mbB Rechtsanwälte Patentanwälte Steuerberater
(86) International application number: PCT/US2015/027542
(87) International publication number: WO 2015/171333

(56) References cited:
- WO-A1-91/18183
- CN-U- 202 596 598
- CN-U- 203 271 691
- CN-Y- 201 212 385
- US-A- 4 431 069
- US-A1- 2002 033 264
- US-A1- 2004 050 591
- US-A1- 2006 065 444

## Description

### BACKGROUND OF THE DISCLOSURE

### 1. Field of the Disclosure

This disclosure relates generally to filtering devices and methods for oilfield fluids.

### 2. Description of the Related Art

Fluids circulated into a wellbore from surface, which may be dry land, a rig at a water surface, or a seabed, may contain many different types of contaminants such as cuttings and metal shavings. The particle size of these contaminants can vary from microns to inches. Additionally, rig crews may inadvertently drop tools, gloves, rags or other unwanted materials into the circulating drilling fluid. These contaminants and unwanted materials, hereinafter referred to as debris, can be harmful. For instance, the debris can cause failures in the electrical components of the bottomhole assemblies.

From US 2006/0065444 A1) a filter for a drill string is known. The filter is arranged within a central bore of the drill string. The filter comprises a perforated receptacle having an open end and a perforated end, a flange adjacent the open end of the receptacle. In order to prevent filter corrosion, the receptacle is coated with an electrically insulating polymer.

In CN 202596598 U a drilling fluid cleaner circulating sub is described. The sub comprises a body and a connector with a bore therethrough. The sub further comprises a cleaner that is installed in the bore.

Further, from US 2004/0050591 A1 a two stage downhole drilling fluid filter is known. The filter comprises a first outer filter section and a second inner filter section. The two filter sections are arranged such that in their installed state the drilling fluid flows from the first section to the second section, wherein a flow area of the first filter section is greater than the flow area of the second filter section

The present disclosure addresses the need to cost-efficiently filter fluids circulated into the wellbore.

### SUMMARY OF THE DISCLOSURE

In aspects, the present disclosure provides a filter for separating particles entrained in a fluid flowing into a wellbore from a surface location, the filter comprising a section of a conduit having a bore through which the fluid flows from the surface location into the wellbore; a ring fixed to an inner surface of the bore of the conduit; and a bag connected to the ring and positioned inside the bore, the bag being formed of a non-metal material and having perforations through which the fluid flows, wherein the bag is pliable such that the bag deforms without undergoing plastic deformation.

Further the disclosure provides a method for separating particles entrained in a fluid flowing into a wellbore from a surface location, the method comprising flowing the fluid from the surface location and through the wellbore using a bore of a conduit; and positioning a filter in the bore of the conduit and along a section of a conduit along which the fluid flows, wherein the filter includes: a ring fixed to an inner surface of the bore of the conduit; and a bag connected to the ring and positioned inside the bore, the bag being formed of a non-metal material and having perforations through which the fluid flows, wherein the bag is pliable such that the bag deforms without undergoing plastic deformation.

Illustrative examples of some features of the disclosure thus have been summarized rather broadly in order that the detailed description thereof that follows may be better understood, and in order that the contributions to the art may be appreciated. There are, of course, additional features of the disclosure that will be described hereinafter and which will form the subject of the claims appended hereto.

### BRIEF DESCRIPTION OF THE DRAWINGS

For detailed understanding of the present disclosure, references should be made to the following detailed description of the preferred embodiment, taken in conjunction with the accompanying drawings, in which like elements have been given like numerals and wherein:
**FIG. 1** illustrates a drilling system that incorporates one or more filters made in accordance with embodiments of the present disclosure;
**FIG. 2** sectionally illustrates a section of a conduit that includes a filter made in accordance with embodiments of the present disclosure; and
**FIG. 3A-E** illustrate various filters.

### DETAILED DESCRIPTION OF THE DISCLOSURE

The present disclosure relates to devices and methods for surface and / or downhole filtering a fluid used during the drilling, completion, recompletion, or workover of a well or while producing fluids from a well. As "used herein, the term "drilling" refers to any and all activities associated with forming a wellbore: *i.e.,* the general process(es) from the moment where there is no hole section until the drilling and logging BHAs and pipe conveyed wireline tools are out of the newly existing, uncompleted, hole section. Thus, "drilling" is not limited to on-bottom-drilling during which rock is being cut, but also hole cleaning, reaming, back-reaming, etc. The fluid may be an engineered fluid or a naturally occurring fluid. Illustrative, but not limiting, examples of engineered fluids, which do not naturally occur, include drilling fluids, lost circulation material (LCM), and fracturing fluids. Naturally occurring fluids include water, seawater, gas, nitrogen, and brine. These fluids may be liquids, liquid mixtures or other fluid-like materials such as gels or slurries. The present disclosure is susceptible to embodiments of different forms. There are shown in the drawings, and herein will be described in detail, specific embodiments of the present disclosure with the understanding that the present disclosure is to be considered an exemplification of the principles of the disclosure, and is not intended to limit the disclosure to that illustrated and described herein. While the present disclosure is described in the context of a hydrocarbon producing well, the present teachings may be equally applied to a water well, a geothermal well, or any other human made feature for accessing the subsurface.

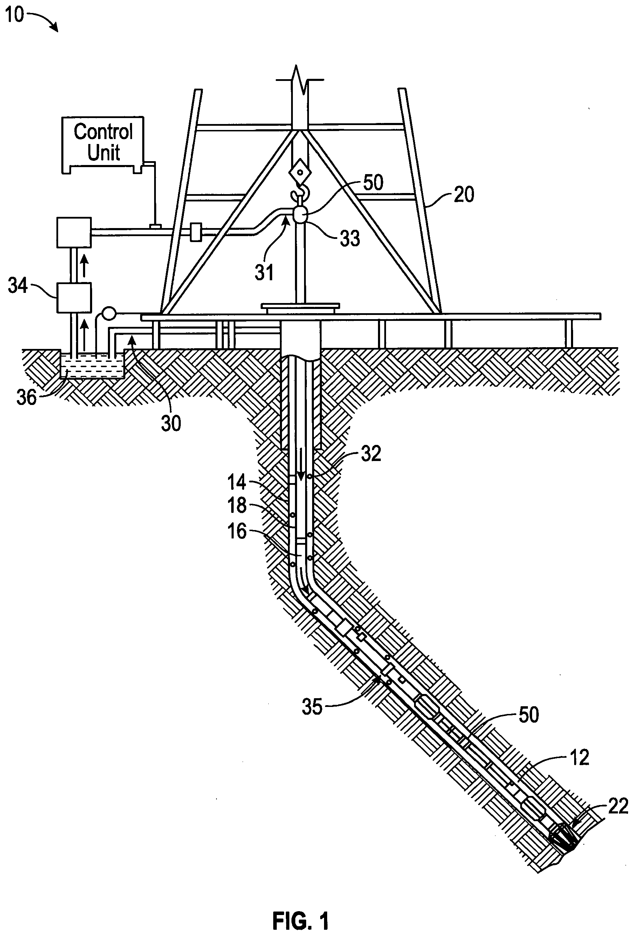

Referring now to **Fig. 1****,** there is shown an embodiment of a drilling system **10** that may use the filtering devices and methods according to the present disclosure. While a land-based rig is shown, these concepts and the methods are equally applicable to offshore drilling systems. The system **10** shown in **Fig. 1** has a bottomhole assembly (BHA) **12** conveyed in a borehole **14** via a drill string **16.** The drill string **16** includes a tubular string **18,** which may be drill pipe or coiled tubing, extending downward from a rig **20** into the borehole **14.** A drill bit **22,** attached to the drill string end, disintegrates the geological formations when it is rotated to drill the borehole **14.**

The drilling system **10** also includes a drilling fluid circulation system **30** that circulates drilling fluid in a conduit **31.** The drilling fluid may be an oil-based drilling mud, a water-based drilling mud, or a synthetic drilling mud. The conduit **31** may be formed by a surface section **33** and a downhole section **35.** The surface portion **33** of the conduit **31** may include any number of devices and flow lines known to those skilled in the art, *e.g*., hoses associated with the mud pumps **34,** the flow lines to the kelly, a continuous circulation system, etc. The downhole section **35** includes the drill string **16** and an annulus **32** formed between the drill string **16** and the wall of the borehole.

During operation, one or more mud pumps **34** at the surface draw the drilling fluid, or "drilling mud," from a mud pit **36** and pump the drilling mud via the surface section **33** of the conduit **31** into the borehole **14** via the drill string **16.** The drilling mud exits at the drill bit **22** and flows up the annulus **32** to the surface. The returning drilling fluid may be processed, cleaned and returned to the mud pit **36** or disposed of in a suitable manner. The circulating drilling mud serves a number of functions, including cooling and lubricating the drill bit **22,** cleaning the borehole of cuttings and debris, and maintaining a suitable fluid pressure in the wellbore (*e.g*., an overbalanced or at-balanced condition). As discussed below, an exemplary filter **50** according to the present disclosure may be used anywhere along the conduit surface section **33** and / or along at the downhole section **35.** The exemplary filter **50** may be positioned in a bore or an annulus of the surface section **33** or downhole section **35.**

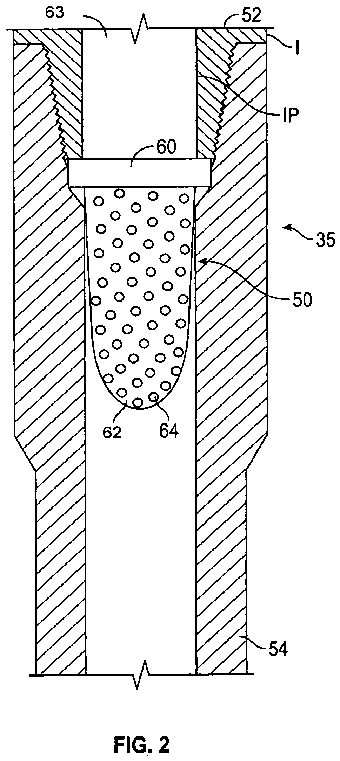

Referring now to **Fig. 2****,** there is shown one embodiment of a filter **50** according to the present disclosure. The filter **50** may be positioned at a conduit downhole section **35,** *e.g.,* at a connection between two components of the drill string **16.** The components may be a joint of drill pipe, a quick disconnect, a sub, sections of the BHA **12 (****Fig. 1****)**, a drill collar or any other part of the drill string **16.** Alternatively, the filter **50** may be positioned in a dedicated sub assembly (not shown). The sub assembly (not shown) may be a tubular member having an interior space for receiving the filter **50** and may be configured to inserted into the drill string **16** by any suitable arrangement (*e.g*., threaded connections). Merely for the ease of discussion, the filter **50** is shown at a connection between an upper pipe joint **52** and a lower pipe joint **54.**

The filter **50** includes a ring **60** and a bag **62**.

For embodiments wherein the filter **50** is used in a bore of the drill string **16,** the ring **60** may be fixed to an inner surface of the bore of the conduit **35.** For example, the ring **60** may seat between the upper pipe joint **52** and the lower pipe joint **54.** The ring **60** maybe formed of a material that is sufficiently stiff enough to secure the bag **62** within a bore **63** of the drill string **16** or a surface conduit **33.** In one embodiment, the ring **60** is formed of an injection molded plastic. However, other materials such as metals or ceramics may be used to form the ring **60.** The bag **62** may be formed in any shape that is complementary to the bore **63,** *e.g*., tubular, conical, frusto-conical, etc. The bag **62** includes perforations **64** through which fluid flows between the upper pipe joint **52** and the lower pipe joint **54.** The perforations may be sized and shaped to block passage of one or more entrained materials / debris that are greater than a specified size. The perforations **64** may be of any desired size and shape. Regarding shape, the perforations 64 may be slots or slits, for instance. Further, the size of perforations may be variable. For example, the material of the bag **62** and the shape of the perforations **64** can allow the size to vary depending on flowrate and/or mud viscosity. The perforation size may also be varied using a mechanical device such as a tensioned rope or using a chemical agent added to the flowing fluid.

In embodiments, the bag **62** may be formed of a material that has relatively high-strength and is cost-effective to manufacture. According to the invention, the bag **62** is formed of a non-metal, such as a polymer. Illustrative suitable non-metals include, but are not limited to, polymers such as plastics, elastomers, fluoropolymers, polyimide, polyetheretherketone (PEEK), polyetherketoneketone (PEKK), nylon, acetal, polyester, polycarbonate, olefins, polystyrene, polyvinyl chloride, polypropylene, etc. as well as composite materials. The bag **62** may be formed by injection molding, compression molding, extrusion, casting, transfer molding, blow molding, powder processing, stock machining, weaving, or one or several other suitable processes. In one embodiment, the bag **62** may be formed of woven aramid fibers. According to the invention, the bag **62** is pliable. As used herein, a pliable material is one that allows the bag **62** to fold, twist, bend, or otherwise deform without undergoing substantial plastic deformation.

In one aspect, the material for the bag **62** may be selected based on the fluid to be filtered. For example, the material may be selected relative to the type of drilling fluid (*e.g*., oil based, water based, synthetic, etc.) Also, drilling fluid can include weighting agents (*e.g.,* barite) and additives (*e.g*., emulsifiers). The material for the bag **62** can be formulated to be chemically and physically non-reactive to the components of the drilling or the carrier fluid. Likewise, the material for the bag **62** may be non-reactive to other naturally occurring or engineered fluids (*e.g.,* lost circulation material) and / or the solid particles in the flowing fluid (e.g., sand, gravel, etc.). Illustrative material properties that may be matched to the flowing fluid include surface tension, respective differential pressure build-up, cutting resistance, hardness, wear resistance, etc.).

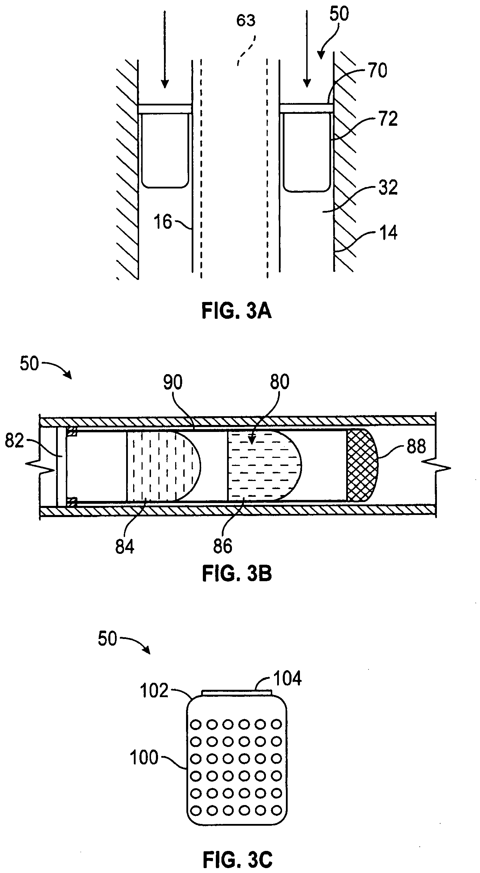

Referring now to **Figs. 3A-D****,** there are shown various filters. **Fig. 3A** shows a filter **50** that may be used during reverse circulation. In reverse circulation, a surface fluid is pumped into the annulus **32** of a borehole **14.** This fluid returns to the surface via the bore **63** of a drill string **16** or surface conduit **33 (****Fig. 1****).** The filter 50 of **Fig. 3A** has a ring **70** formed as a half-torus, which is a general ring shape. A bag **72** is connected to the ring **70.** The ring **70** may be or may be sufficiently pliable to deform when encountering restrictions in the borehole **14.** The filter **50** of **Fig. 3A** may be positioned subsurface in the annulus **32** or at the surface along the surface conduit **33 (****Fig. 1****)** that is in communication with the annulus **32.** The ring **70** may be fixed to an outer surface of the conduit **33** or **35**. For example, the ring **70** may seat on a collar, shoulder, or other upset along the outer surface of the conduit **33, 35.**

Referring to **Fig. 3B****,** there is shown a filter **50** having a multi-layered bag **80** with a common ring **82.** In this non-limiting embodiment, the bag **80** has three layers: layers 84, 86, 88 while other embodiments can have greater or fewer layers. A tether **90,** which may be a rope, cord, or string, connects the layers 84, 86, 88 to the ring **82.** The length of the tether 90 is selected to have a preset axial spacing or offset between the layers 84, 86, 88. The layers 84, 86, 88 may have the same filtering parameters (*e.g*., particle size filtered, particle shape filtered, material filtered, etc.). Alternatively, the layers 84, 86, 88 may have different filtering parameters. As shown, layer **84** has transverse slits, layer **86** has longitudinal slits, and layer **88** has circular perforations.

The perforation shape may be varied to filter certain shaped debris (*e.g*., fibers or bars) while allowing other shapes (*e*.*g*., spheres) of similar size to pass through. Also, while the perforation shapes are varied in layers 84, 86, 88, it should be understood that perforation size may alternatively or additionally be varied within layer or between layers. In embodiments, the perforations of the layers **84-88** may be arranged as a grid of slots orthogonal in a labyrinth-like form. The earlier or inner layer **84** may be relatively strong and configured to catch metal while the later layers **86, 88** may be relatively finer to catch non-metals. Thus, the layers **84-88** may be closed and disposed of separately.

In a related embodiment, the positions of the layers **84-88** are radially offset relative to one another. The offset is selected to allow relatively large round particles to pass while catching fibers / bar shaped particles of only slightly greater maximum length than the diameter of a drop ball or other selected structure. Also, the perforation size and orientation and the length of the tethers **90** can be sized to allow certain geometries (*e*.*g*., spheres) while blocking other geometries (*e*.*g.*, bars). For instance, the perforations of the layers may be slots oriented orthogonal to each other. Such an arrangement may prevent a bar/shaped fiber to turn from layer to layer and get caught while relatively large round particles could pass.

Referring to **Fig. 3C****,** there is shown a filter **50** with a closeable bag **100.** The bag **100** may have an open end 102 that can be closed by a closure member 104. The closure member 104 may be a drawstring, strap, cord, rope, an elastic member, etc.

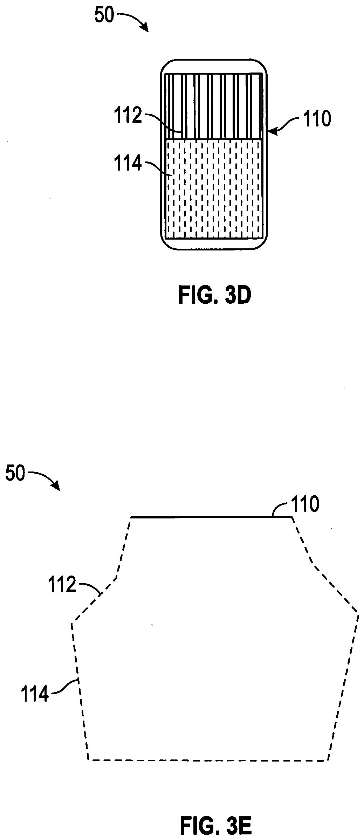

Referring to **Fig. 3D****,** there is shown another filter **50** that has a bag **110** that has at least two different types of perforations **112, 114**. For example, the upper perforations **112** have relatively long slots and the lower perforations **114** have relatively small perforations. This may be useful when using a ball drop to activate a well tool or to convey any other objects through the conduit and past the filter **50**. When the ball (not shown) needs to pass, a viscous media may be pumped downhole to clog a majority of the lower perforations **114**. The clogging increases the pressure differential and causes the larger slots **112** to increase in size, which allows the ball (not shown) to pass through the larger slots **112.** Thereafter, a thinning agent may be pumped downhole to breakup or otherwise flush out the viscous media. After being so flushed, the bag **110** can now filter the fluid as before. While a chemical treatment has been described, a mechanical, hydraulic, electromagnetic or other activation may also be used.

The **Fig. 3D** example may be used in a method to allow the use of a pump down ball or other object. The method may include the steps of filling a conduit upstream of the filter 50 with a viscous, degradable substance that clogs up the relatively smaller size perforations along a lower portion of the filter 50. The pressure differential caused by the clogging enlarges the relatively larger sized perforations along an upper portion of the filter **50.** That is, the larger sized perforations expand from their nominal size, which is their pre-adjusted size. The pump down ball, or other object, is pumped down and passes through the enlarged larger sized perforations. Optionally, a degrading agent may be introduced to dissolve the viscous, degradable substance to reopen the smaller size perforations in the lower portion of the filter **50.**

In still other examples, the filters may be positioned in parallel streams; *e.g*., one for the water/soap, one for the nitrogen/air in foam making.

Referring now to **Fig. 3E****,** there is shown still a filter **50** that has at least two different sizes of perforations **120, 122.** The shape of the filter **50** and the locations of the perforations **120, 122** may be selected to selectively admit or block entry of debris flowing along specific flow paths. For instance, the perforations **120** may be larger in size than the perforations **122.** The perforations **120** may be positioned or located along a flow path that encounters less flow than the perforations **122.** Thus, the perforations **120** may be located in positions with low flow rate, no flow rate, or negative flow rate.

In one mode of use, one or more of the filters **50** according to the present disclosure may be used during drilling operations. The filter **50** may be positioned along the conduit surface section **33** that directs drilling into the drill string **16.** Additionally or alternatively, one or more of the filters **50** may be positioned along the conduit downhole section **35** (*e.g.,* in a section of the drill string **16**). In these cases, the filter **50** is secured in the conduit **33** and / or **35** such that the bag **62** is disposed in the bore through which the drilling fluid flows. When so positioned, the bag **62** removes debris and other materials that exceed a predetermined size from the flowing fluid. Thus, components in the BHA **12** and elsewhere are protected from damaging contact from those debris and materials. When desired, the filter(s) **50** may be extracted from the conduit **31** and disposed of in conjunction or separated from the solids caught. The material of the filter bag may be biodegradable.

It should be understood that the present disclosure is not limited to the drilling environment. Any number of natural and engineered fluids with one or several phases may be pumped into the wellbore. The filters of the present disclosure may be advantageously used to filter those fluids as well. For example, the filter **50** may be used along a fluid line that conveys a lifting fluid into a produced fluid during artificial lift operations. The filter **50** may also be used during milling, reaming, underreaming, and other operations wherein rotating cutters or other downhole tools are energized using high-pressure fluid supplied from the surface. Still other operations that may benefit from the present teachings include logging run on pipe with downhole turbine powering LWD/"wireline" tools, junk baskets, hydraulic fracturing operations, stimulations, acidizing operations, and other completion operations wherein a surface fluid is conveyed into the wellbore via a suitable string.

From the above, it should be appreciated that filters according to the present disclosure may include layers that have different desirable properties, such as consecutively lower mesh size, different mesh shape or shape orientation, materials, strength, etc. Furthermore, the filters can be modified in terms of which particles it will catch or not. Additionally, the filters may be made at least partially of elastic material that open up pores upon increase of differential pressure across the bag. In yet other embodiments, the filters may be partially or completely covered with resin, improving desired properties such as abrasion resistance, stiffness, strength, mesh size or shape, surface tension. Additionally, the perforation or mesh size may be variable, depending on chemical environment, differential pressure across it, or other parameters. In still further embodiments, the filter may have a shape (e.g., a "mushroom shape") that different sized perforations to selectively admit specific larger particles pass. Additionally, the perforations may be selectively positioned according to flow rates; e.g., low flow zones, no flow zones, negative flow zones.

From the above, it should be appreciated that bags according to the present disclosure may be deformed by methods other than chemically or mechanically. For instance, the filter may be deformed using an electromagnet near the filter and a ferromagnetic content in the material making up the filter or inside the filter. Initially, the perforations are a nominal size; *i.e.,* a size before active adjustment. When the electromagnet is turned on, the filter is stretched. Alternatively, the filter may be selectively elongated by pushing it with a lever from upstream or by pulling it with a rope or similar mechanical member from downstream - either directly with the conduit opened or indirectly with the conduit closed and the flow on.

The foregoing description is directed to particular embodiments of the present disclosure for the purpose of illustration and explanation. It will be apparent, however, to one skilled in the art that many modifications and changes to the embodiment set forth above are possible without departing from the scope of the disclosure. It is intended that the following claims be interpreted to embrace all such modifications and changes.

## Claims

1. A filter (50) for separating particles entrained in a fluid flowing into a wellbore (14) from a surface location, the filter (50) comprising:
a section of a conduit (31) having a bore (63) through which the fluid flows from the surface location into the wellbore (14);
a ring (60, 82) fixed to an inner surface of the bore of the conduit (31); and
a bag (62, 80) connected to the ring (60, 82), positioned inside the bore (63) and having perforations (64) through which the fluid flows, **characterised in that** the bag (62, 80) is formed of a non-metal material and **in that** the bag (62, 80) is pliable such that the bag (62, 80) deforms without undergoing plastic deformation.

2. The filter (50) of claim 1, wherein the section of the conduit (31) is one of: (i) a surface section (33), and (ii) a downhole section (35).

3. The filter (50) of claim 1, wherein the bag (62, 80) is formed of a woven aramid fiber.

4. The filter (50) of claim 1, further comprising a closure member (104) selectively closing an open end of the bag (62, 80).

5. The filter (50) of claim 1, wherein the bag (62, 80) has a plurality of layers (84, 86, 88), wherein each of the plurality of layers (84, 86, 88) has a different filtering parameter, the filtering parameter being one of: particle size filtered, particle shape filtered, and material filtered.

6. The filter (50) of claim 5, wherein the filtering parameters are controlled by at least one of: (i) perforation size, (ii) perforation geometry, (iii) perforation orientation, (iv) relative perforation orientation for each layer, (v) axial location of each filter (50), and (vi) radial offset of each layer.

7. The filter (50) of claim 1, further comprising: a viscous media selected to clog at least a portion of the perforations (64), an agent selected to dissipate the viscous media, and a pump at the surface configured to pump the viscous media from the surface to the bag (62, 80).

8. A method for separating particles entrained in a fluid flowing into a wellbore (14) from a surface location, the method comprising:
flowing the fluid from the surface location and through the wellbore (14) using a bore (63) of a conduit (31); and
positioning a filter (50) in the bore (63) of the conduit (31) and along a section of a conduit (31) along which the fluid flows, wherein the filter (50) includes: a ring (60, 82) fixed to an inner surface of the bore (63) of the conduit (31); and a bag (62, 80) connected to the ring (60, 82) and positioned inside the bore (63), the bag (62, 80) having perforations (64) through which the fluid flows, **characterised in that** the bag (62, 80) is formed of a non-metal material and is pliable such that the bag (62, 80) deforms without undergoing plastic deformation.

9. The method of claim 8, wherein the bag (62, 80) is formed of one of: a polymer and a woven aramid fiber.

10. The method of claim 8, further comprising closing an open end of the bag (62, 80) to capture debris in the bag (62, 80).

11. The method of claim 8, further comprising varying a size of at least some of the perforations (64) while the filter (50) is in the conduit (31), wherein the varying includes increasing the size of the at least some of the perforations (64) and then decreasing the size of the at least some of the perforations (64).

12. The method of claim 11, wherein the size of at least a portion of the perforations (64) is varied by using one of: (i) a pressure differential, (ii) a chemical, (iii) a mechanical member, and (iv) electromagnetic waves.

13. The method of claim 8, further comprising conveying an object past the filter (50), wherein the object is larger than a nominal size of the perforations (64); and decreasing the size of the at least some of the perforations (64) after the object is past the filter (50).

## Patentansprüche

1. Filter (50) zum Abtrennen von Partikeln, die in einem Fluid mitgeführt werden, das von einem Oberflächenort aus in ein Bohrloch (14) strömt, wobei der Filter (50) Folgendes umfasst:
einen Abschnitt einer Leitung (31) mit einem Innendurchmesser (63), durch den das Fluid vom Oberflächenort in das Bohrloch (14) strömt;
einen Ring (60, 82), der an einer Innenfläche am Innendurchmesser der Leitung (31) befestigt ist; und
eine Tasche (62, 80), die mit dem Ring (60, 82) verbunden ist, die innerhalb des Innendurchmessers (63) angeordnet ist und Perforationen (64) aufweist, durch die das Fluid strömt, **dadurch gekennzeichnet, dass** die Tasche (62, 80) aus einem nichtmetallischen Material gebildet ist und **dadurch, dass** die Tasche (62, 80) so biegsam ist, dass sich die Tasche (62, 80) ohne plastische Verformung verformt.

2. Filter (50) nach Anspruch 1, wobei der Abschnitt der Leitung (31) eines der Folgenden ist: (i) ein Oberflächenabschnitt (33) und (ii) ein Abschnitt im Bohrloch (35).

3. Filter (50) nach Anspruch 1, wobei die Tasche (62, 80) aus einer gewebten Aramidfaser gebildet ist.

4. Filter (50) nach Anspruch 1, ferner umfassend ein Verschlusselement (104) zum selektiven Schließen eines offenen Endes der Tasche (62, 80).

5. Filter (50) nach Anspruch 1, wobei die Tasche (62, 80) eine Vielzahl von Schichten (84, 86, 88) aufweist,
wobei jede der Vielzahl von Schichten (84, 86, 88) einen anderen Filterparameter aufweist, wobei der Filterparameter einer der Folgenden ist: gefilterte Partikelgröße, gefilterte Partikelform und gefiltertes Material.

6. Filter (50) nach Anspruch 5, wobei die Filterparameter durch mindestens eines der Folgenden gesteuert werden: (i) Perforationsgröße, (ii) Perforationsgeometrie, (iii) Perforationsausrichtung, (iv) relative Perforationsausrichtung für jede Schicht, (v) axiale Position jedes Filters (50) und (vi) radialer Versatz jeder Schicht.

7. Filter (50) nach Anspruch 1, ferner umfassend: ein viskoses Medium, das ausgewählt ist, um mindestens einen Abschnitt der Perforationen (64) zuzusetzen, ein Mittel, das ausgewählt ist, um das viskose Medium aufzulösen, und eine Pumpe an der Oberfläche, die ausgelegt ist, um das viskose Medium von der Oberfläche zu der Tasche (62, 80) zu pumpen.

8. Verfahren zum Abtrennen von Partikeln, die in einem Fluid mitgeführt werden, das von einem Oberflächenort aus in ein Bohrloch (14) strömt, wobei das Verfahren umfasst:
Strömenlassen des Fluids von dem Oberflächenort und durch das Bohrloch (14) unter Verwendung eines Innendurchmessers (63) einer Leitung (31); und
Positionieren eines Filters (50) am Innendurchmesser (63) der Leitung (31) und entlang eines Abschnitts einer Leitung (31), entlang derer das Fluid fließt, wobei der Filter (50) Folgendes einschließt: einen Ring (60, 82), der an einer Innenfläche am Innendurchmesser (63) der Leitung (31) befestigt ist; und eine Tasche (62, 80), die mit dem Ring (60, 82) verbunden und innerhalb des Innendurchmessers (63) angeordnet ist, wobei die Tasche (62, 80) Perforationen (64) aufweist, durch die das Fluid strömt, **dadurch gekennzeichnet, dass** die Tasche (62, 80) aus einem nichtmetallischen Material gebildet ist und so biegsam ist, dass sich die Tasche (62, 80) ohne plastische Verformung verformt.

9. Verfahren nach Anspruch 8, wobei die Tasche (62, 80) ausgebildet ist aus einem der Folgenden: einem Polymer und einer gewebten Aramidfaser.

10. Verfahren nach Anspruch 8, ferner umfassend das Schließen eines offenen Endes der Tasche (62, 80), um Schutt in der Tasche (62, 80) einzuschließen.

11. Verfahren nach Anspruch 8, ferner umfassend das Variieren einer Größe von mindestens einigen der Perforationen (64), während sich der Filter (50) in der Leitung (31) befindet, wobei das Variieren das Vergrößern der Größe der zumindest einigen der Perforationen (64) und dann das Verkleinern der Größe der zumindest einigen der Perforationen (64) einschließt.

12. Verfahren nach Anspruch 11, wobei die Größe zumindest eines Teils der Perforationen (64) durch die Verwendung eines der Folgenden variiert wird: (i) eine Druckdifferenz, (ii) eine Chemikalie, (iii) ein mechanisches Element und (iv) elektromagnetische Wellen.

13. Verfahren nach Anspruch 8, ferner umfassend das Fördern eines Objekts an dem Filter (50) vorbei, wobei das Objekt größer als eine Nenngröße der Perforationen (64) ist; und Verkleinern der Größe von den zumindest einigen der Perforationen (64), nachdem das Objekt an dem Filter (50) vorbeigegangen ist.

## Revendications

1. Filtre (50) pour séparer des particules entraînées dans un fluide s'écoulant dans un puits de forage (14) depuis un emplacement de surface, le filtre (50) comprenant :
une section d'un conduit (31) ayant un alésage (63) à travers lequel le fluide s'écoule depuis l'emplacement de surface dans le puits de forage (14) ;
une bague (60, 82) fixée à une surface interne de l'alésage du conduit (31); et
un sac (62, 80) relié à la bague (60, 82), positionné à l'intérieur de l'alésage (63) et ayant des perforations (64) à travers lesquelles le fluide s'écoule, **caractérisé en ce que** le sac (62, 80) est formé d'un matériau non métallique et **en ce que** le sac (62, 80) est pliable de telle sorte que le sac (62, 80) se déforme sans subir une déformation plastique.

2. Filtre (50) selon la revendication 1, dans lequel la section du conduit (31) est l'une parmi : (i) une section de surface (33), et (ii) une section de fond de puits (35).

3. Filtre (50) selon la revendication 1, dans lequel le sac (62, 80) est formé d'une fibre aramide tissée.

4. Filtre (50) selon la revendication 1, comprenant en outre un élément de fermeture (104) fermant de manière sélective une extrémité ouverte du sac (62, 80).

5. Filtre (50) selon la revendication 1, dans lequel le sac (62, 80) comporte une pluralité de couches (84, 86, 88), dans lequel chacune de la pluralité de couches (84, 86, 88) a un paramètre de filtrage différent, le paramètre de filtrage étant un parmi : un filtre à taille de particule, un filtre à forme de particule, et un filtré à matériau.

6. Filtre (50) selon la revendication 5, dans lequel les paramètres de filtrage sont contrôlés par au moins un parmi : (i) une taille de perforation, (ii) une géométrie de perforation, (iii) une orientation de perforation, (iv) une orientation de perforation relative pour chaque couche, (v) un emplacement axial de chaque filtre (50), et (vi) un décalage radial de chaque couche.

7. Filtre (50) selon la revendication 1, comprenant en outre : un milieu visqueux choisi pour boucher au moins une partie des perforations (64), un agent sélectionné pour dissiper le milieu visqueux, et une pompe à la surface conçue pour pomper le milieu visqueux à partir de la surface du sac (62, 80).

8. Procédé pour séparer des particules entraînées dans un fluide s'écoulant dans un puits de forage (14) depuis un emplacement de surface, le procédé comprenant :
un écoulement du fluide depuis l'emplacement de surface et à travers le puits de forage (14) en utilisant un alésage (63) d'un conduit (31); et
un positionnement d'un filtre (50) dans l'alésage (63) du conduit (31) et le long d'une section d'un conduit (31) le long duquel le fluide s'écoule, dans lequel le filtre (50) comprend : une bague (60, 82) fixée à une surface intérieure de l'alésage (63) du conduit (31) ; et un sac (62, 80) relié à la bague (60, 82) et positionné à l'intérieur de l'alésage (63), le sac (62, 80) ayant des perforations (64) à travers lesquelles le fluide s'écoule, **caractérisé en ce que** le sac (62, 80) est formé d'un matériau non métallique et est pliable de telle sorte que le sac (62, 80) se déforme sans subir une déformation plastique.

9. Procédé selon la revendication 8, dans lequel le sac (62, 80) est formé d'un parmi : un polymère et une fibre aramide tissée.

10. Procédé selon la revendication 8, comprenant en outre une fermeture d'une extrémité ouverte du sac (62, 80) pour capturer des débris dans le sac (62, 80).

11. Procédé selon la revendication 8, comprenant en outre une variation d'une taille d'au moins certaines des perforations (64) tandis que le filtre (50) est dans le conduit (31), dans lequel la variation comprend une augmentation de la taille de l'au moins une partie des perforations (64) et ensuite une diminution de la taille de l'au moins une partie des perforations (64).

12. Procédé selon la revendication 11, dans lequel la taille d'au moins une partie des perforations (64) est variée en utilisant un parmi : (i) un différentiel de pression, (ii) un produit chimique, (iii) un organe mécanique, et (iv) des ondes électromagnétiques.

13. Procédé selon la revendication 8, comprenant en outre un transport d'un objet à travers le filtre (50), dans lequel l'objet est plus grand qu'une taille nominale des perforations (64) ; et une diminution de la taille de l'au moins une partie des perforations (64) après avoir passé l'objet à travers le filtre (50).
